Europäisches Patentamt

European Patent Office

Office européen des brevets

(19)

(11) Publication number: **0 248 507 B1**

# EUROPEAN PATENT SPECIFICATION

(12)

(45) Date of publication of patent specification: **24.07.91**  (51) Int. Cl.⁵: **B60R 15/04**

(21) Application number: **87302111.7**

(22) Date of filing: **11.03.87**

(54) Improvements in recreational vehicle water use systems, particularly tank installations.

(30) Priority: **05.06.86 US 871045**

(43) Date of publication of application:
**09.12.87 Bulletin 87/50**

(45) Publication of the grant of the patent:
**24.07.91 Bulletin 91/30**

(84) Designated Contracting States:
**DE ES FR GB IT NL SE**

(56) References cited:
EP-A- 0 095 903      DE-A- 2 423 561
DE-C- 866 149        IT-A- 1 208 064
US-A- 3 981 323      US-A- 4 185 340
US-A- 4 573 650

(73) Proprietor: **THETFORD CORPORATION**
**7101 Jackson Road**
**Ann Arbor Michigan 48103(US)**

(72) Inventor: **Sargent, Charles Lee**
**747 Country Club Road**
**Ann Arbor Michigan 48105(US)**

(74) Representative: **Williams, Trevor John et al**
**J.A. KEMP & CO. 14 South Square Gray's Inn**
**London WC1R 5EU(GB)**

## Description

Background and Summary of the Invention

This invention relates to recreational vehicles such as motor homes, travel trailers and other camping vehicles, and is particularly concerned with new and unique installations for the tanks which are parts of the water use systems of such vehicles.

The typical recreational vehicle (RV) comprises a wheeled chassis on which a body is mounted. The body contains an interior space for use by occupants. RV's have come to enjoy increasing popularity over the years because of the many conveniences which they provide. Today many RV's are entirely self-contained which means that they have not only their own living accommodations but all related conveniences as well. One of the conveniences is a complete self-contained water use system including sanitary fixtures such as sinks, showers, baths, toilets and the like. Fresh water for the system is contained in one or more fresh water storage tanks; waste liquid is stored in one or more holding tanks. Typically there are separate waste holding tanks for what are commonly respectively referred to as "gray water" and "black water". Gray water is waste water from sinks and showers whereas black water is waste from toilets.

In self-contained RV's it has heretofore been the practice to locate the fresh water storage tank inside the vehicle body where it is within the interior occupant space. Such tanks usually have generally rectangular shapes and are mounted on the body floor, for example, concealed beneath a bench or a cabinet.

Waste water tanks are exterior of the RV body, usually being suspended from the chassis below the body floor. Because of this, they often reduce the RV's road clearance in the area of the chassis where they are located. They must be sufficiently strong to withstand damage from external forces such as rocks and stones for example.

The waste tanks have inlets which are in communication with outlets of the respective sanitary fixtures which they serve. Each waste tank has an outlet controlled by a gate valve. These gate valves usually connect to a common outlet to which a hose is attached for dumping. When the valves are opened, the tanks' contents drain through the hose. Because dumping of waste onto open ground is usually prohibited, the tanks are dumped either into an intermediate container which is then carried to the disposal site, or else by moving the RV to the disposal site. The valves and the related conduits are also exterior of the RV and hence subject to potential damage from external forces.

In general, neither fresh water tanks nor waste holding tanks are intended for removal. Since the waste holding tanks are disposed beneath the RV, they are removable only for service, and if at all, only by access to the undercarriage of the RV to separate the means of attachment allowing them to be dropped down for removal. In the case of a fresh water tank on the RV's interior, removal requires some interior part or parts of the body, such as a bench or cabinet, be first removed.

The present invention relates to an improved arrangement for the installation and removal of these types of tanks on recreational vehicles. A wall structure is disposed in cooperative association with the RV body floor and an adjacent exterior sidewall of the RV body to define a stowage compartment, or space, which is interior of the RV body but separated from the interior occupant space of the RV body. An opening is provided through at least one of the RV's sidewall and the floor, between the exterior of the RV body and the stowage compartment. This opening is typically rectangular in shape and is opened and closed by a door. The tank has a size and shape allowing it to pass bodily through this opening when the door is open. A disconnectable fluid connection is provided between the tank and the sanitary fixture, or fixtures, which it serves.

The construction is particularly advantageous because it provides for mounting of a tank in a location where it is not exposed to external forces, yet the stowage compartment is separated from the interior occupant space. The tank can be conveniently removed via the exterior of the RV, and hence there is no need to transport the tank through the interior occupant space for either installation or removal. This is especially desirable in the case of a waste holding tank.

IT-A-1 208 064 discloses a recreational vehicle in accordance with the prior art portion of claim 1. As compared therewith, the present invention, as defined in claim 1, provides for the valve controlling access from the toilet to the holding tank to be mounted on the tank so as to enable the tank as withdrawn from the vehicle to be closable by the same valve as provides access to the tank from the toilet. Preferably, there is an operator valve accessible from within the interior occupant space; conveniently this can be connected with the valve by a disconnectable coupling which is automatically coupled upon insertion of the tank into operative association with the toilet to receive waste therefrom.

The invention will be further appreciated from the ensuing description which should be considered in conjunction with the accompanying drawings.

## Brief Description of the Drawings

Figure 1 is a side elevational view of a representative recreational vehicle embodying the principles of the present invention.

Figure 2 is a fragmentary perspective view illustrating adaption of the RV of Figure 1 in accordance with principles of the invention.

Figure 3 is a perspective view of an apparatus which may be associated with the installation to facilitate usage.

Figure 4 is a perspective view illustrating an alternate position of operation of the apparatus shown in Figure 3.

Figure 5 is a view illustrating the tank having been removed from the RV.

Figure 6 is a sectional view similar to Figure 3 illustrating an embodiment of the invention with the tank fully installed.

Figure 7 is a transverse cross-sectional view taken in the direction of arrows 12-12 in Figure 6.

Figure 8 is a view similar to Figure 6 but showing the tank displaced from the fully installed position of Figure 6.

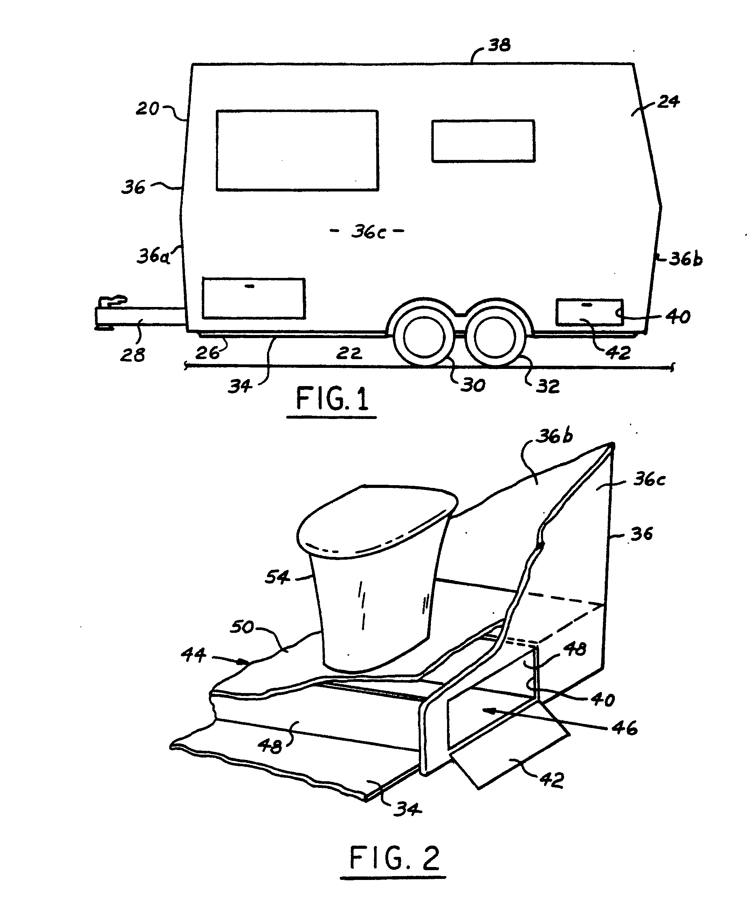

Figure 1 illustrates a representative recreational vehicle (RV) 20 which embodies principles of the invention. RV 20 is illustrated as a travel trailer which is adapted to be pulled behind a towing vehicle (not shown). Principles of the invention are applicable to other types of RVs including without limitation motor homes.

RV 20 comprises a wheeled chassis 22 on which is supported the RV body 24. Chassis 22 comprises a perimeter frame 26 having a tongue 28 at the forward end via which the trailer connects to the towing vehicle. The chassis further comprises tandem axles 30 and 32 which are supported from frame 26 by a suitable suspension system which may include leaf springs and shock absorbers.

Body 24, in general, comprises a floor 34, a vertical side 36, and a roof 38 forming an enclosure. The body is shown to be generally rectangular in shape although it is to be appreciated that any given body may have departures from such a shape. Side 36 comprises four sidewalls, namely a front 36a, a rear 36b, and two lateral sidewalls 36c. It is one of these lateral sidewalls 36c which is viewed directly in Figure 1, and it is arranged at a right angle to floor 34. Sidewall 36c is provided with a rectangular opening 40 which is shown in Figure 1 to be closed by a door 42.

Figure 2 illustrates more detail of the RV body in the area of the left rear corner in the vicinity of opening 40. Figure 2 illustrates portions of the floor and sidewall broken away so that both interior and exterior of the body are seen. A wall structure 44 is cooperatively associated with floor 34 and side 36 on the interior of the body 24 to form aw stowage compartment 46. Stowage compartment 46 opens to the exterior of the body via opening 40 when door 42 is open.

Wall structure 44 comprises floor joists 48 which are spaced apart along the length of the body 24 and which are disposed to lie perpendicular to the length of the body. Floor joists 48 serve to support a horizontal wall 50 whereby wall 50 and two consecutive joists 48 define the top and sides of stowage compartment 46. The bottom of the stowage compartment is defined by floor 34. The illustrated floor joists 48 and wall 50 may be part of more extensive like structure within body 24 such as the entire actual floor of the RV's interior occupant space, or they may simply be of a localised nature extending no farther than the definition of the stowage compartment. The stowage compartment could span the full width of the RV's body; alternatively, a vertical member between joists 48 could close the end of the compartment opposite opening 40. In any event, stowage compartment 46 is open to the RV's exterior via opening 40, but it is segregated from the interior occupant space within the RV's body.

Stowage compartment 46 has a generally rectangular transverse cross sectional shape which is slightly larger than opening 40. The stowage compartment is adapted to receive a tank which has a rectangular transverse shape just slightly smaller than the rectangular transverse shape of the stowage compartment. The joists 48 constrain the tank against longitudinal displacement in the stowage compartment. As can be appreciated, the tank is installed into and removed from the stowage compartment by bodily moving the tank lengthwise through opening 40 with door 42 open. Once the tank has been installed within the stowage compartment, door 42 is closed. The door typically contains a lock or latch to keep it closed.

In the installed position, the tank is connected for use with an associated water use fixture. The usage illustrated in Figure 1 shows tank 52 as a black water holding tank for receiving waste from a toilet. The toilet 54 is shown on wall 50 directly above the installed tank.

Because the tank basically passes horizontally into and out of the stowage compartment via opening 40, the manner in which the connection and disconnection of its opening to the closet may require some component of upward bodily displacement of the tank after its opening has been placed in vertical alignment with the closet flange. Whether such upward motion will in fact be necessary will of course depend upon the particular type of installation and connection, and it is to be appreciated that such upward bodily displacement may be unnecessary for some installations.

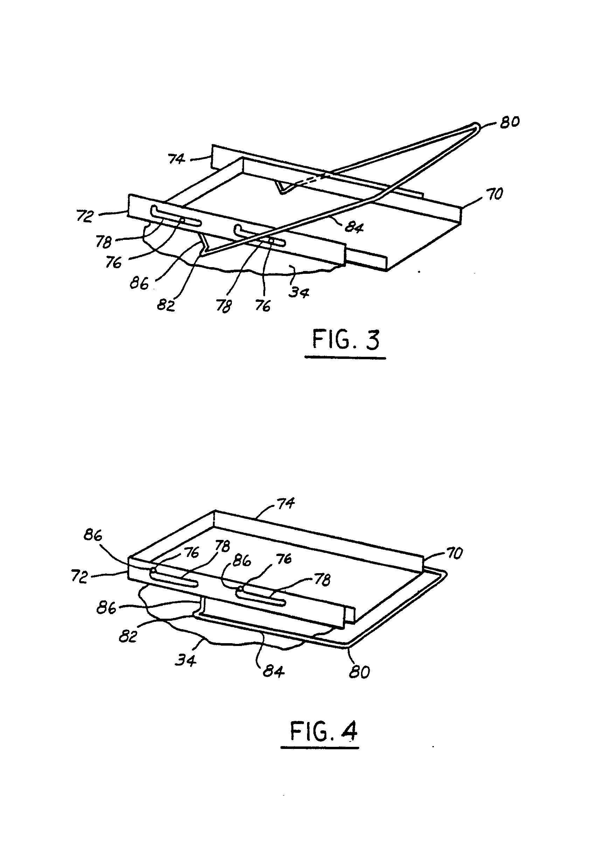

If upward tank displacement is however needed, Figure 3 and 4 portray a mechanism which is capable of imparting such upwardly bodily displacement to the tank. Basically the mechanism comprises a tray 70 on which the tank is supported. The tray is in turn guided for horizontal motion into and out of stowage compartment 46 by a pair of tracks 72, 74 on opposite sides which are next to the respective joists 48. Tray 70 contains rollers 76 captured in slots 78 in the tracks.

Once the tray is fully horizontally positioned within the stowage compartment, after having transported the tank into the stowage compartment through opening 40, a lever mechanism 80 is operated to impart a slight amount of vertical elevation to the tray, and hence to the tank. This will move the tank's opening up into sealed engagement with the closet.

The lever mechanism 80 is shown pivotally mounted at 82 on floor 34 with a longer lever arm 84 projecting toward the opening for manual operation by an individual. As this longer lever arm 84 is pushed down, a shorter lever arm 86 underlying the tray swings in an arc imparting slight elevation to the tray and tank. The slots 78 which support the tray rollers 76 have short vertical segments 86 at their inner ends so that in response to the operation of the lever in the manner just described, the tray and the tank will move vertically upwardly. The tank will typically be empty during installation and therefore the operation of the lever will not require any significant amount of effort.

When the tank is to be removed, it may have a considerably greater weight due to its waste contents and so will assist in dropping the tray, and hence the tank, out of its sealed engagement with the closet when the lever mechanism is operated in the opposite manner from that just described. The lever mechanism may be provided with some type of a latch or over-centre mechanism which is effective to keep the elevated tray and tank in that position as waste contents accumulate in the tank. This will prevent the weight acting on the tray from unintentionally dropping the tray and tank from the elevated position.

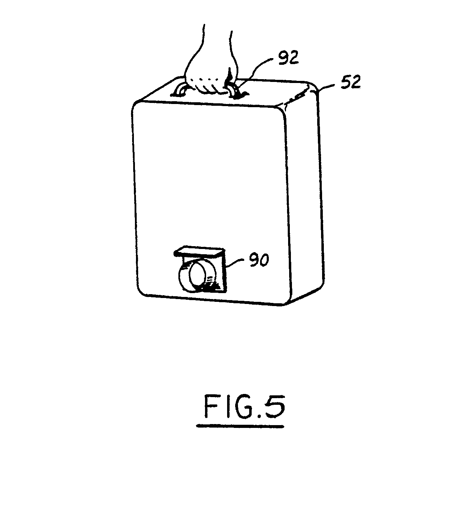

Figure 5 shows tank 52 to have its own valve 90 for opening and closing its opening. The tank is also equipped with one or more handles 92 to facilitate not only the manipulation of the tank into and out of the stowage compartment, but also for use in transporting the tank to a waste disposal facility. Figure 5 shows valve 90 in the closed position, and an individual carrying the tank by one of the handles.

At the waste disposal facility, the contents of the tank may be dumped by opening valve 90 and pouring the contents out through the tank opening. Alternatively, a separate pourout opening or spout closed by a removable cap may also be provided on the tank. Whether such an additional outlet opening or spout is necessary will depend upon the particular location where the tank opening is located on the tank. If it is located at a corner, pouring of the waste contents from the tank is more convenient than if the opening is at the centre.

In any event, the ease with which the tank can be removed, installed and carried by an individual is important and contributes to a more efficient construction for an RV because the exterior holding tanks can now be eliminated. Likewise an RV can be left at a camping site without the need to move it for periodic dumping of tanks which might be required where the tanks are not conveniently removable.

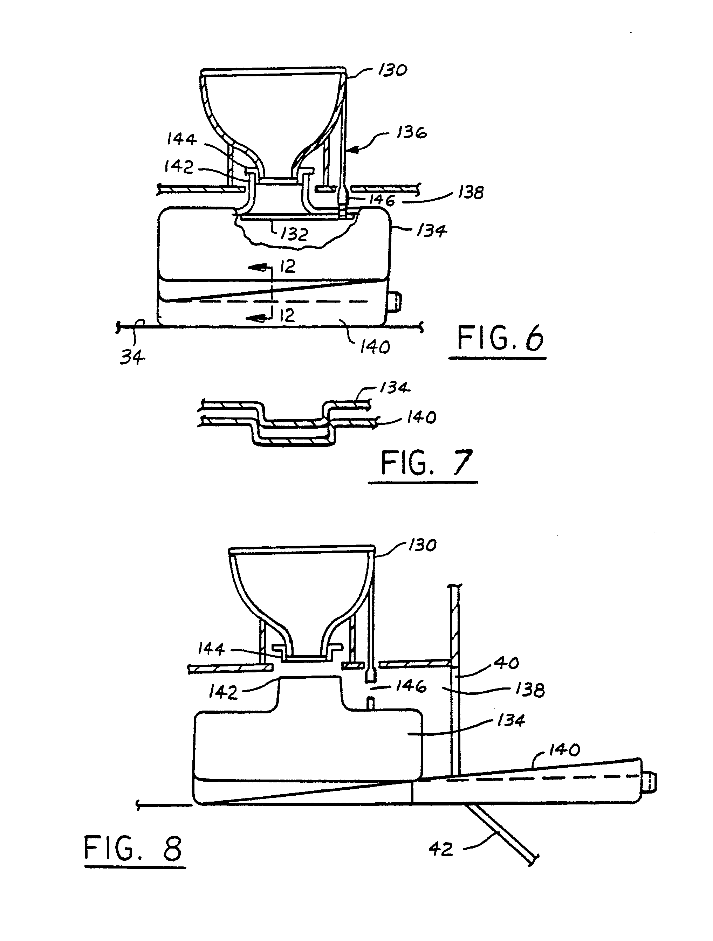

Figures 6, 7 and 8 portray an embodiment of the invention with a toilet 130. There is no flush valve in toilet 130 itself. Rather the valve 132 is incorporated into the holding tank 134. The valve operating mechanism 136 may be similar to that described in US-A-4 185 340 but there is provided a means for making and breaking of the connection in the valve actuator mechanism when the tank is installed in and removed from the stowage compartment 138.

With this mechanism, it is necessary, once the tank is in its aligned position below the bowl, for the tank to be bodily displaced upwardly. This is accomplished by means of a wedge 140 which fits between the bottom of the tank and the floor 34. The wedge is movable into and out of stowage compartment 138 through the opening 40. In the position shown in Figure 6, the wedge is directly below the tank where it has caused the tank to be displaced upwardly to bring the tank opening 142 into a sealed engagement with the bowl outlet 144 and to also cause connection to be made in the actuating mechanism at 146. When the wedge is removed, as in Figure 8, the tank can drop down whereby breaking the connection between bowl outlet 144 and tank opening 142, and the connection in the actuating mechanism at 146 between the tank-mounted valve and the toilet-mounted operator. The point of connection and disconnection 146 in the valve operating mechanism may be in the nature of interfitting shafts which are keyed and/or splined, for example. Once the wedge has been removed, the holding tank can likewise be removed through opening 40 for dumping. The same considerations for dumping that were described earlier apply to tank 134. Figure 7 illustrates a representative cross-section though the wedge and tank.

While the illustrated examples have portrayed tank installations involving waste holding tanks for black water, certain principles of the invention also apply to gray water holding tanks, particularly the general principles for tank stowage and removal.

## Claims

1. A recreational vehicle which comprises a wheeled chassis (22) on which a vehicle body (24) is supported, said body comprising a horizontal floor (34) which overlies the chassis and a vertical sidewall (36) which extends upwardly from the floor, said floor and sidewall being exterior walls of said body, said body having an occupant space which contains a water use sanitary toilet (130); wall means (50,48) cooperatively associated with said floor (34) and sidewall (36) to form a stowage compartment in the interior of the body but separated from said occupant space, said toilet (130) being coupled with said wall means (50) and said stowage compartment (138) being positioned below said toilet, said toilet (130) having a bowl with an open lower end (144) for discharge of waste from said bowl; an opening (40) between said stowage compartment (138) and the exterior of the body; a closure (42) for opening and closing said opening; a liquid waste tank (134) within said stowage compartment for collection of waste water which has been used in the sanitary toilet bowl (130), said tank being positioned within said stowage compartment and hidden from view in said occupant space by said wall means (50), said tank (134) having a size and shape which allows it to pass bodily through said opening (40) when said closure opens said opening, said tank and said toilet bowl being relatively located when said tank is positioned within said stowage compartment so that waste can pass downwardly from the toilet bowl (130) into the tank (134), an opening (142) in said tank through which said waste passes into said tank, and a valve (132) which, when open, enables waste from said toilet bowl to enter said tank and, when closed, seals the tank contents from the stowage compartment, characterised in that said valve (132) is disposed on said tank (134) to open and close said tank opening (142), said valve, when closed enabling said tank to be removed from said stowage compartment without spillage of the tank contents.

2. A vehicle as claimed in claim 1, including an operator (136) for said valve (132) which is accessible from within said interior occupant space.

3. A vehicle as claimed in claim 2, further comprising a coupling means (146) between said operator (136) and valve (132) which includes a separable connection.

4. A vehicle as claimed in claim 3, in which the separable connection of said coupling means connects and disconnects concurrently with the connection and disconnection of a fluid connection between the tank and the toilet bowl.

5. A vehicle as claimed in any preceding claim, in which said opening (40) is rectangular in shape and said tank (134) has a rectangular cross sectional shape smaller than said opening allowing the tank to be bodily displaced through said opening in a direction which is normal to the tank's rectangular cross section.

6. A vehicle as claimed in claim 5, in which the tank includes a handle (92) disposed proximate said opening (40) for grasping to facilitate removal of the tank through the opening.

7. A vehicle as claimed in any preceding claim, in which said wall means comprises a horizontal top wall (50) spaced vertically above said floor, and means providing a disconnectable fluid connection between said tank and said toilet pass through said top wall.

8. A vehicle as claimed in claim 7, in which said disconnectable fluid disconnection (142,144) between said tank and said sanitary fixture is operable by means (140) for causing vertical bodily displacement of said tank (134) away from said top wall to disconnect the fluid connection and enable the tank to be removed from the stowage compartment via said opening.

9. A vehicle as claimed in claim 8, in which said means for causing vertical bodily displacement of said tank away from said top wall comprises a movable support (140) on which the tank (134) is supported within the stowage compartment, and means for lowering the support relative to said top wall to disconnect the fluid connection and enable the tank to be removed from the stowage compartment via said opening.

10. A vehicle as claimed in claim 8 or 9, in which said means for causing vertical bodily displacement of said tank away from said top wall comprises a cam means (140).

11. A vehicle as claimed in claim 10, in which said cam means comprises a wedge means (140) disposed between said tank (134) and said floor.

12. A vehicle as claimed in claim 11, in which said wedge means comprises a wedge member (140) which is moved out of the opening to cause the bodily displacement of the tank (134) from said top wall.

13. A vehicle as claimed in claim 7, in which said wall means also includes a vertical wall (48) extending between said top wall (40) and said floor (34).

14. A vehicle as claimed in any preceding claim, including means to constrain the tank, when stowed, against horizontal displacements.

15. A vehicle as claimed in claim 14, in which said wall means comprises vertical wall portions (48) as said means to constrain the tank against horizontal displacements when stowed.

**Revendications**

1. Véhicule de loisirs qui comporte un châssis (22) muni de roues sur lequel un corps de véhicule (24) est supporté, ledit corps comportant un plancher horizontal (34) qui surplombe le châssis et une paroi verticale (36) qui s'étend vers le haut à partir du plancher, ledit plancher et ladite paroi étant des parois extérieures dudit corps, ledit corps ayant un espace d'occupants qui contient des toilettes (130) sanitaires utilisant de l'eau ; des moyens (50, 48) formant parois associés de façon coopérative avec ledit plancher (34) et ladite paroi (36) de façon à former un compartiment d'arrimage à l'intérieur du corps, mais séparé dudit espace des occupants, lesdites toilettes (130) étant accouplées avec lesdits moyens (50) formant parois et ledit compartiment d'arrimage (138) étant positionné en dessous desdites toilettes, lesdites toilettes (130) ayant une cuvette avec une extrémité inférieure ouverte (144) pour la décharge de l'eau usée venant de ladite cuvette ; une ouverture (40) entre ledit compartiment d'arrimage (138) et l'extérieur du corps ; une fermeture (42) pour ouvrir et fermer ladite ouverture ; un réservoir (134) d'eau usée à l'intérieur dudit compartiment d'arrimage pour la collecte de l'eau usée qui a été utilisée dans la cuvette (130) de toilettes et de sanitaires, ledit réservoir étant positionné à l'intérieur dudit compartiment d'arrimage et caché de la vue dans ledit espace des occupants par lesdits moyens (50) formant paroi, ledit réservoir (134) ayant une taille et une forme qui lui permettent de passer à travers ladite ouverture (40) lorsque ladite fermeture ouvre ladite ouverture, ledit réservoir et ladite cuvette de toilettes étant disposés l'un par rapport à l'autre lorsque ledit réservoir est positionné à l'intérieur dudit compartiment d'arrimage de telle sorte que l'eau usée puisse passer vers le bas à partir de la cuvette (130) de toilettes dans le réservoir (134) ; une ouverture (142) dans ledit réservoir à travers laquelle lesdites eaux usées passent dans ledit réservoir, et une vanne (132) qui, lorsqu'elle est ouverte, permet aux eaux usées venant de ladite cuvette de toilettes de pénétrer par ledit réservoir et, lorsqu'elle fermée, scelle le contenu du réservoir par rapport au compartiment d'arrimage, caractérisé en ce que ladite vanne (132) est disposée sur ledit réservoir (134) pour ouvrir et fermer ladite ouverture (142) de réservoir, ladite vanne, lorsqu'elle est fermée, permettant audit réservoir d'être retiré dudit compartiment d'arrimage sans éclaboussage par le contenu du réservoir.

2. Véhicule selon la revendication 1, comportant un dispositif d'actionnement (136) pour ladite vanne (132), qui est accessible de l'intérieur dudit espace intérieur des occupants.

3. Véhicule selon la revendication 2, comportant de plus des moyens d'actionnement (146) entre ledit dispositif d'actionnement (136) et ladite vanne (132), qui comportent une connexion séparable.

4. Véhicule selon la revendication 3, dans lequel la connexion séparable desdits moyens d'accouplement est connectée et déconnectée en même temps que l'opération de connexion et de déconnexion d'une connexion de fluide entre le réservoir et la cuvette de toilettes.

5. Véhicule selon l'une quelconque des revendications précédentes, dans lequel ladite ouverture (40) a une forme rectangulaire et ledit réservoir (134) a une forme de section rectangulaire plus petite que ladite ouverture, ce qui permet au réservoir d'être déplacé à travers ladite ouverture dans une direction qui est perpendiculaire à la section rectangulaire du réservoir.

6. Véhicule selon la revendication 5, dans lequel le réservoir comporte une poignée (92) disposée au voisinage de ladite ouverture (40) pour l'aggripement afin de faciliter le retrait du réservoir à travers l'ouverture.

7. Véhicule selon l'une quelconque des revendications précédentes, dans lequel lesdits moyens formant paroi comportent une paroi supérieure horizontale (50) espacée verticalement au dessus dudit plancher, et des moyens fournissant une connexion de fluide déconnectable entre ledit réservoir et lesdites toilettes traversent ladite paroi supérieure.

8. Véhicule selon la revendication 7, dans lequel ladite déconnexion de fluide déconnectable (142, 144) entre ledit réservoir et ledit dispositif sanitaire, peut être actionnée par des moyens (140) permettant de provoquer le déplacement vertical dudit réservoir (134) de façon à l'éloigner de ladite paroi verticale afin de déconnecter la connexion de fluide et de permettre au réservoir d'être retiré du compartiment d'arrimage par ladite ouverture.

9. Véhicule selon la revendication 8, dans lequel lesdits moyens pour provoquer le déplacement vertical dudit réservoir de façon à l'éloigner de ladite paroi supérieure comportent un support mobile (140) sur lequel le réservoir (134) est supporté à l'intérieur du compartiment d'arrimage, et des moyens pour abaisser le support par rapport à ladite paroi supérieure de façon à déconnecter la connexion de fluide et à permettre au réservoir d'être retiré du compartiment d'arrimage par ladite ouverture.

10. Véhicule selon la revendication 8 ou 9, dans lequel lesdits moyens pour provoquer le déplacement vertical dudit réservoir de façon à l'éloigner de ladite paroi supérieure comportent des moyens (140) formant came.

11. Véhicule selon la revendication 10, dans lequel lesdits moyens formant came comportent des moyens (140) formant cale disposés entre ledit réservoir (134) et ledit plancher.

12. Véhicule selon la revendication 11, dans lequel lesdits moyens formant cale comportent un élément de cale (140) qui est retiré de l'ouverture de façon à provoquer le déplacement du réservoir (134) depuis ladite paroi supérieure.

13. Véhicule selon la revendication 7, dans lequel lesdits moyens formant paroi ont également une paroi verticale (48) s'étendant entre ladite paroi supérieure (40) et ledit plancher (34).

14. Véhicule selon l'une quelconque des revendications précédentes, comprenant des moyens pour empêcher le réservoir, lorsqu'il est arrimé, de se déplacer horizontalement.

15. Véhicule selon la revendication 14, dans lequel lesdits moyens formant paroi comportent des parties (48) de paroi verticale formant lesdits moyen pour empêcher le réservoir de se déplacer horizontalement lorsqu'il est arrimé.

**Patentansprüche**

1. Freizeitwohnmobil mit einem auf Rädern stehenden Fahrgestell (22), auf dem ein Fahrzeugkörper (24) angebracht ist, welcher einen horizontalen Boden (34) aufweist, der auf dem Fahrgestell angebracht ist, und eine vertikale Seitenwand (36), die sich vom Boden aufwärts erstreckt, wobei der Boden und die Seitenwand äußere Wände des Körpers sind und der Körper eine Nutzfläche mit einer wasserbetriebenen Toilette (130) hat; Wandeinrichtungen (50, 48), die gemeinsam mit dem Boden (34) verbunden sind und eine Seitenwand (36) zur Bildung eines Stauraumes im Inneren des Körpers, jedoch getrennt von der Nutzfläche aufweisen, wobei die Toilette (130) mit den Wandeinrichtungen (50) verbunden ist und der Stauraum (138) unterhalb der Toilette positioniert ist, wobei die Toilette (130) ein Gefäß mit einem offenen unteren Ende (144) zum Abfluß des Abfalls aus diesem Gefäß hat; eine Öffnung (40) zwischen dem Stauraum (138) und dem Äußeren des Körpers; einen Verschluß (42) zum Öffnen und Verschließen der Öffnung; einen Tank für verbrauchte Flüssigkeit (134) innerhalb des Stauraumes zum Sammeln von verbrauchtem Wasser, das im Toilettengefäß (30) benutzt wurde, wobei dieser Tank innerhalb des Stauraumes und unsichtbar für das Auge durch Seitenwandeinrichtungen (50) in der Nutzfläche angebracht ist, wobei der Tank (134) Form und Größe hat, die es erlauben, durch die Öffnung (40) zu gelangen, wenn der Verschluß die Öffnung öffnet, wobei der Tank und das Toilettengefäß relativ zueinander angeordnet sind, wenn der Tank innerhalb des Stauraumes positioniert ist, so daß der Abfall aus dem Toilettengefäß (130) hinunter in den Tank (134) gelangen kann, eine Öffnung (142) in dem Tank, durch die der Abfall in den Tank gelangt, und ein Ventil (132), welches dem Abfall im geöffneten Zustand ermöglicht, aus dem Toilettengefäß in den Tank zu gelangen, und welches im geschlossenen Zustand den Tankinhalt vom Stauraum fernhält, **dadurch gekennzeichnet**, daß das Ventil (132) auf dem Tank (134) angebracht ist, um die Tanköffnung (142) zu öffnen und zu schließen, und im geschlossenen Zustand ein Entfernen des Tanks ohne Auslaufen des Inhaltes vom Stauraum ermöglicht.

2. Fahrzeug nach Anspruch 1, welches ein Bedienungselement (136) für das Ventil enthält und zu welchem man vom Inneren der Nutzfläche aus Zugriff hat.

3. Fahrzeug nach Anspruch 2, weiterhin aus einer Verbindungseinrichtung (146) zwischen dem Bedienungselement (136) und dem Ventil (132) mit einer trennbaren Verbindung bestehend.

4. Fahrzeug nach Anspruch 3, bei dem die trennbare Verbindung der Verbindungsvorrichtungen eine Verbindung herstellt bzw. löst, und zwar gleichzeitig mit der Herstellung der Unterbrechung einer Flüssigkeitsverbindung zwischen Tank und Toilettengefäß.

5. Fahrzeug nach einem der vorhergehenden Ansprüche, wobei die Öffnung (40) rechteckig ist und der Tank (134) eine rechteckige Querschnittsform hat und kleiner als die Öffnung ist, so daß der Tank durch die Öffnung körperlich in einer Richtung entfernt werden kann, die der rechteckigen Querschnittsform des Tanks entspricht.

6. Fahrzeug nach Anspruch 5, wobei der Tank einen sich in der Nähe der Öffnung befindlichen Griff (92) aufweist, um das Entfernen des Tankes durch die Öffnung zu erleichtern.

7. Fahrzeug nach einem der vorhergehenden Ansprüche, bei dem die Wandeinrichtungen eine horizontale obere Wand haben, die sich vertikal über dem Boden befindet, und Einrichtungen für eine trennbare Flüssigkeitsverbindung zwischen dem Tank und der Toilette durch die obere Wand.

8. Fahrzeug nach Anspruch 7, in dem die trennbare Flüssigkeitstrennung (142, 144) zwischen dem Tank und der sanitären Haltevorrichtung durch eine Vorrichtung (140) zu bedienen ist, um vertikales körperliches Entfernen des Tankes (134) von der oberen Wand zur Unterbrechung der Flüssigkeitsverbindung und zum Entfernen des Tankes vom Stauraum durch die Öffnung zu bewirken.

9. Fahrzeug nach Anspruch 8, wobei Einrichtungen für die vertikale körperliche Entfernung des Tankes von der oberen Wand aus von einer beweglichen Stütze (140), auf die der Tank (134) im Stauraum gestützt wird, und einer Einrichtung zum Herablassen der Stütze in Relation zur obersten Wand besteht, um die Flüssigkeitsverbindung zu unterbrechen und es so möglich zu machen, daß der Tank aus dem Stauraum durch die Öffnung entfernt wird.

10. Fahrzeug nach Anspruch 8 oder 9, wobei die Einrichtung zur vertikalen körperlichen Entfernung des Tanks aus der oberen Wand aus einer Nockeneinrichtung (140) besteht.

11. Fahrzeug nach Anspruch 10, wobei die Nockeneinrichtung eine Keileinrichtung (140) hat, die sich zwischen Tank (134) und Boden befindet.

12. Fahrzeug nach Anspruch 11, wobei die Keileinrichtung aus einem Keil (140) besteht, der aus der Öffnung heraus bewegt wird, um das körperliche Entfernen des Tankes (134) von der oberen Wand zu verursachen.

13. Fahrzeug nach Anspruch 7, wobei die Wandeinrichtung ebenfalls eine vertikale Wand (48) beinhaltet, die sich zwischen der oberen Wand (40) und dem Boden (34) erstreckt.

14. Fahrzeug nach einem der vorhergehenden Ansprüche einschließlich einer Einrichtung, die es nicht zuläßt, daß der Tank bei der Verwahrung horizontal verschoben wird.

15. Fahrzeug nach Anspruch 14, wobei die Wandeinrichtungen aus vertikalen Wandabschnitten (48) bestehen, die es verhindern, daß der Tank bei der Verwahrung horizontal verschoben wird.

FIG. 1

FIG. 2

FIG. 3

FIG. 4

## FIG.5

FIG. 6

FIG. 7

FIG. 8